# EUROPEAN PATENT APPLICATION

(11) **EP 1 422 250 A1**
(43) Date of publication of application: **26.05.2004**
(21) Application number: 02079922.7
(22) Date of filing: 20.11.2002
(51) Int. Cl.: C08F 10/06

(54) **Branched polypropylene**

(71) Applicant: ATOFINA Research, 7181 Seneffe (Feluy) (BE)
(72) Inventor: Razavi, Abbas, 7000 Mons (BE)

(57) **Abstract**

Provided is a method for the production of a polypropylene comprising branches in the polymer backbone, which method comprises:
(a) forming macromers from an olefin monomer; and
(b) polymerising propylene in the presence of the macromers and a catalyst, under polymerising conditions which favour the incorporation of the macromers into the polypropylene backbone, to form a branched polypropylene;
wherein the catalyst employed in step (a) comprises a metallocene catalyst which promotes a chain terminating β-alkyl elimination reaction to form terminal unsaturated groups in the macromers.

## Description

The present invention concerns a method for producing branched polypropylenes having improved processibility and good mechanical strength. The invention is especially effective when applied to polypropylene such as miPP (metallocene-produced isotactic polypropylene). The invention also relates to branched polypropylenes produced using the methods of the invention and to polypropylene foams formed from such branched polypropylenes.

In many applications in which polyolefins are employed, it is desirable that the polyolefin used has good mechanical properties. It is known that, in general, high molecular weight polyolefins have good mechanical properties. Additionally, since the polyolefin must usually undergo some form of processing (such as moulding processes, extrusion processes and the like) to form the final product, it is also desirable that the polyolefin used has good processing properties. However, unlike the mechanical properties of the polyolefin, its processing properties tend to improve as its molecular weight decreases.

Thus, a problem exists to provide a polyolefin which simultaneously exhibits favourable mechanical properties and favourable processing properties. Attempts have been made in the past to solve this problem, by producing polyolefins having both a high molecular weight component (HMWC) and a low molecular weight component (LMWC). Such polyolefins have either a broad molecular weight distribution, or a multimodal molecular weight distribution.

There are several methods for the production of multimodal or broad molecular weight distribution polyolefins. The individual polyolefins can be melt blended, or can be formed in separate reactors in series. Use of a dual site catalyst for the production of a bimodal polyolefin resin in a single reactor is also known.

Chromium catalysts for use in polyolefin production tend to broaden the molecular weight distribution and can in some cases produce bimodal molecular weight distribution, but usually the low molecular weight part of these resins contains a substantial amount of the co-monomer. Whilst a broadened molecular weight distribution provides acceptable processing properties, a bimodal molecular weight distribution can provide excellent properties.

Ziegler-Natta catalysts are known to be capable of producing bimodal polyethylene using two reactors in series. Typically, in a first reactor, a low molecular weight homopolymer is formed by reaction between hydrogen and ethylene in the presence of the Ziegler-Natta catalyst. It is essential that excess hydrogen be used in this process and, as a result, it is necessary to remove all the hydrogen from the first reactor before the products are passed to the second reactor. In the second reactor, a co-polymer of ethylene and hexene is formed so as to produce a high molecular weight polyethylene.

Metallocene catalysts are also known in the production of polyolefins. For example, EP-A-0619325 describes a process for preparing polyolefins having a bimodal molecular weight distribution. In this process, a catalyst system which includes two metallocenes is employed. The metallocenes used are, for example, a bis(cyclopentadienyl) zirconium dichloride and an ethylene-bis(indenyl) zirconium dichloride. By using the two different metallocene catalysts in the same reactor, a molecular weight distribution is obtained, which is at least bimodal.

A problem with known bimodal polyolefins is that if the individual polyolefin components are too different in molecular weight, they may not be as miscible with each other as is desired. The lack of miscibility tends to adversely affect both mechanical strength and processing properties.

Polypropylene resin is used in a variety of different applications. However, polypropylene resin suffers from the problem of having a low melt strength, which restricts the use of polypropylene in a number of applications because the polypropylene is difficult to process. It is known in the art to increase the melt strength of polypropylene, for example by irradiating the polypropylene with an electron beam. It is known that electron beam irradiation significantly modifies the structure of a polypropylene molecule. The irradiation of polypropylene results in chain scission and grafting (or branching) which can occur simultaneously. Up to a certain level of irradiation dose, it is possible to produce from a linear polypropylene molecule having been produced using a Ziegler-Natta catalyst, a modified polymer molecule having free-end long branches, otherwise known as long chain branching. For example, US-A-5554668 discloses a process for irradiating polypropylene to increase the melt strength thereof. An increase in the melt strength is achieved by decreasing the melt flow rate, otherwise known as the melt index. It is disclosed that a linear propylene polymer material is irradiated with high energy ionising radiation, preferably an electron beam, at a dose rate in the range of from about 1 to 1x10⁴ Mrads per minute for a period of time sufficient for a substantial amount of chain scission of the linear, propylene polymer molecule to occur but insufficient to cause gelation of the material. Thereafter, the material is maintained for a period of time sufficient for a significant amount of long chain branches to form. Finally, the material is treated to deactivate substantially all free radicals present in the irradiated material. A disadvantage of the process disclosed in US-A-5554668 is that the production rate of the irradiated polypropylene is relatively low, This results in difficulties in commercial implementation of the process. In addition, the specification discloses the use of a very broad range of dose rates i.e. from 1 to 1x10⁴ Mrads per minute. High dose rates of greater than about 40 Mrad can result in a substantially fully cross-linked structure of the polypropylene. Such a cross-linked structure is difficult to process.

CA-A-2198651 discloses a continuous method for producing polypropylene mixtures of increased stress-crack resistance and melt strength in which a low-energy electron beam accelerator with an energy of from 150 to 300 keV at a radiation dose of 0.05 to 12 Mrads is employed. This process also suffers from the disadvantage that the production rate of the irradiated powder can be somewhat low for commercial acceptance. Moreover, the polypropylene powder to be irradiated must be in the form of very fine particles. The specification discloses that bifunctional, unsaturated monomers can be added before and/or during the irradiation. Such compounds may include divinyl compounds, alkyl compounds, dienes, or mixtures thereof. These bifunctional, unsaturated monomers can be polymerised with the help of free radicals during the irradiation. Butadiene is particularly preferred.

There is thus a need for preparing polypropylene having high melt strength that does not suffer from the disadvantages of the irradiation methods.

Accordingly, the present invention provides a method for the production of a polypropylene comprising branches in the polymer backbone, which method comprises:
(a) forming macromers from an olefin monomer; and
(b) polymerising propylene in the presence of the macromers and a catalyst, under polymerising conditions which favour the incorporation of the macromers into the polypropylene backbone, to form a branched polypropylene;
wherein the catalyst employed in step (a) comprises a metallocene catalyst which promotes a chain terminating β-alkyl elimination reaction to form terminal unsaturated groups in the macromers.

The β-alkyl elimination reaction is described and discussed in a recent article by Moscardi and Resconi (Moscardi G. and Resconi L., in "Propene polymerisation with the isospecific, highly regioselective rac-Me2C(3-t-Bu-1-Ind)2ZrCl2/MAO catalyst. 2.Combined DFT/MM analysis of chain propagation and chain release reactions." In Organometallics, 20, 1918-1931, 2001.)

The order of steps (a) and (b) is not especially limited, provided that the macromers are incorporated into the polypropylene backbone. Thus, these steps can be carried out simultaneously or sequentially in the same reaction zone, or can be carried out in separate reaction zones, preferably in series. The method may comprise a plurality of steps for forming macromers, such as two or more macromer forming steps for forming two or more macromer types (different macromer types may for example include macromers of different lengths, or macromers formed from different olefin monomers). The method may also comprise further steps for forming the polypropylene backbone, if desired (these further steps may for example include steps for producing a backbone having different levels of macromer incorporation, or no macromer incorporation, or may include steps for forming a propylene co-polymer using a co-monomer).

Typically, the steps (a) and (b) are carried out using two separate catalysts. In this embodiment of the present invention, it is preferred that a dual site catalyst is employed. In the context of the present invention, a dual site catalyst comprises a support having both catalysts present on individual grains of the support. Such a dual site catalyst is efficient, since it allows steps (a) and (b) to be performed simultaneously in the same reaction zone. However, in some embodiments the same catalyst may be employed in steps (a) and (b), particularly when the catalyst is of a bis-indenyl type, which is suitable for forming the backbone and the macromers. Such catalysts are also efficient, since they allow steps (a) and (b) to be performed simultaneously in the same reaction zone.

The invention is not limited to such preferred embodiments and can also be satisfactorily performed using the same or different catalysts in different reaction zones, as mentioned above. In these embodiments single site catalysts are usually employed, in which individual grains of the support are associated with only one type of catalyst.

The advantage of employing a metallocene catalyst in step (a), which promotes a chain terminating β-alkyl elimination reaction to form unsaturated terminal groups, is that these groups are ideal for insertion into the polymer backbone as it is forming. This allows the creation of units within the backbone having long pendant hydrocarbon chains, i.e. long chain branches. Such ease of insertion is difficult to achieve in any olefin polymerisation when the monomer has 3 carbon atoms or greater, due to steric hindrance at the metal centre preventing re-insertion. The inventors have found that the use of a catalyst that promotes β-alkyl elimination, instead of the more common β-hydrogen elimination, overcomes this problem by removing the bulky alkyl group, as explained below in Scheme 1 and Scheme 2.

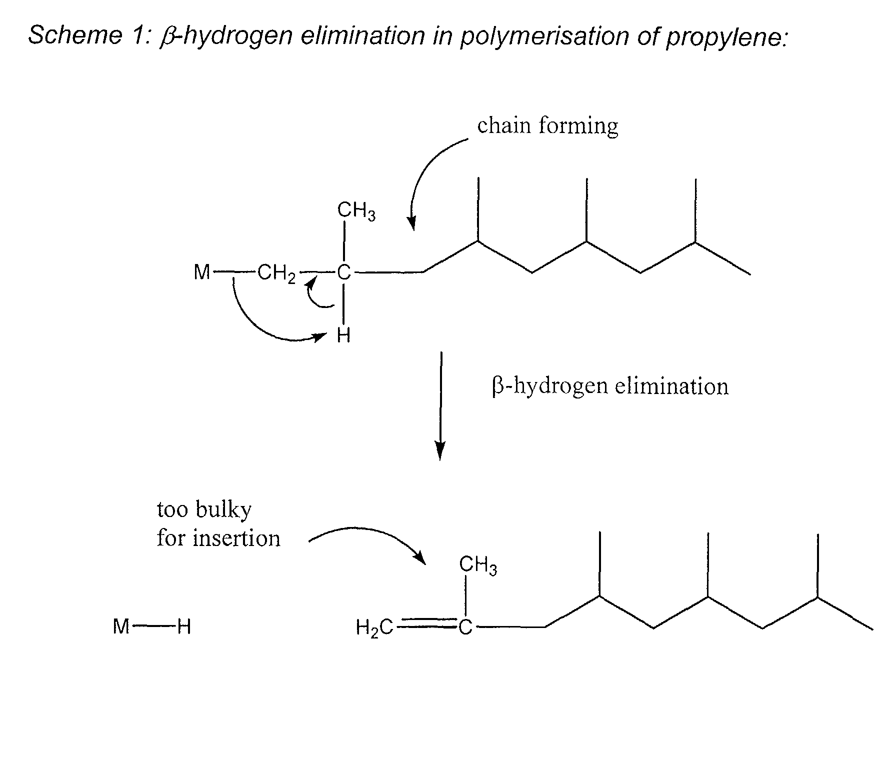

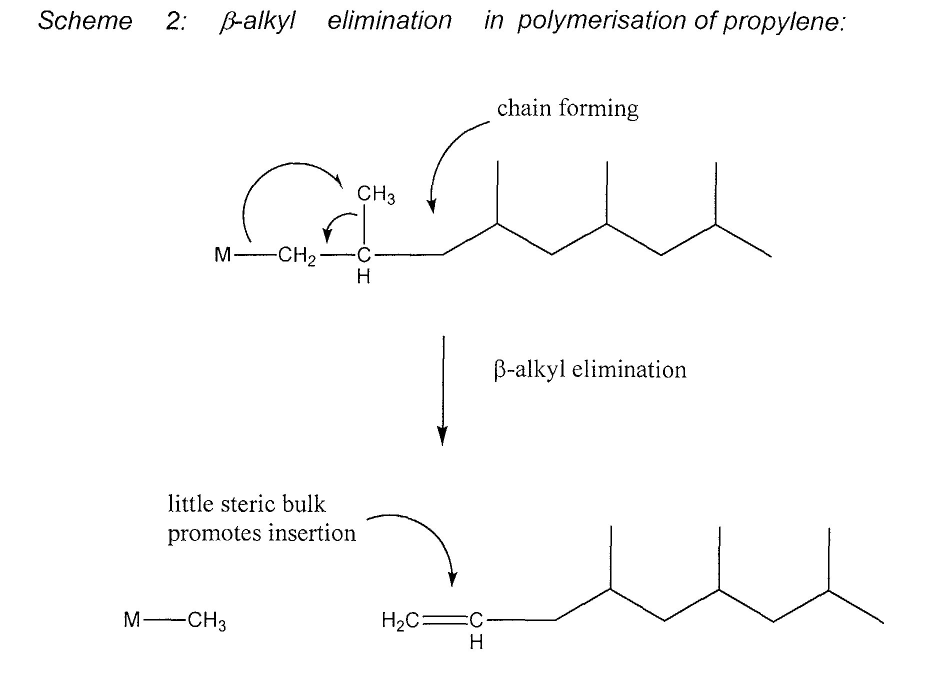

The catalyst employed in step (a) is not especially limited, provided that it promotes β-alkyl elimination, as explained above. Preferably, the catalyst employed in step (a) comprises a metallocene catalyst of formula (I) or formula (II):

(Ind-Rₘ)₂R"MQ₂ (I)

wherein each Ind is the same or different and is an indenyl group or a tetrahydroindenyl group; each R is the same or different and is a hydrocarbyl group having from 1-20 carbon atoms; m is an integer from 0-6; R" is a structural bridge imparting stereorigidity to the catalyst; M is a metal atom from group IVB or is vanadium; and each Q is a hydrocarbon having from 1-20 carbon atoms or is a halogen;

R"(CpRₖ)(Cp'R'ₙ)MQ₂ (II)

wherein Cp is a cyclopentadienyl ring; Cp' is a fluorenyl ring; R" is a structural bridge imparting stereorigidity to the catalyst; R is a hydrocarbyl group having from 1-20 carbon atoms; each R' is the same or different and is a hydrocarbyl group having from 1-20 carbon atoms, k is an integer from 1-4; and n is an integer of from 0-8; M is a metal atom from group IVB or is vanadium; and each Q is a hydrocarbon having from 1-20 carbon atoms or is a halogen

When a bisindenyl catalyst is employed in step (a), the catalyst is preferably substituted, and may comprise a symmetrical or unsymmetrical substitution pattern. In a preferred embodiment, one or both indenyl groups are substituted in the 2-position and/or the 3-position. In this and other embodiments, it is particularly preferred that one or both indenyl groups are disubstituted.

Typically, one or more of the substituents on the indenyl group is a bulky substituent. The bulky substituent is not especially limited, but may be selected from an isopropyl group, a tertiary butyl group and a trimethylsilyl (TMS) group. It is particularly preferred that the bulky group is in a position non-vicinal to the bridge, such as the 3-position.

For the avoidance of doubt, the structure of the bisindenyl group will now be discussed. A tetrahydroindenyl ligand is depicted, but the labelling of the carbon atoms of the ligand also applies to an unsaturated indenyl ligand. The ligand used in catalysts described above is a indenyl-type ligand, in which, in the context of the present invention, the substituent positions are numbered from 1-7 according to the system set out in the structure below:

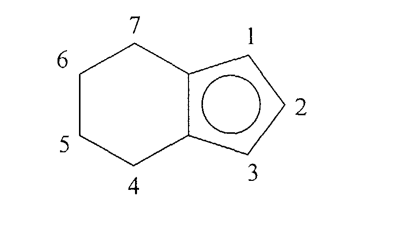

To distinguish substitution in the first ligand from the second, the second is numbered according to the same system, but from 1'-7', in accordance with convention. In this type of catalyst, the position of the bridge is not particularly limited, and is preferably a 1,1'-bridge, a 2,2'-bridge or a 1,2'-bridge, a 1,1'-bridge being most preferred. The substitution patterns discussed above generally apply to a 1,1' bridge. Thus, the ligands are preferably substituted in the 2- and/or 3-positions on the five-membered ring and any position other than the 2-position (any position non-vicinal to the bridge) is favoured for the bulky group, the 3-position being most preferred.

In other preferred embodiments, the Cp ring on catalyst (II) may be di-substituted comprising only substituents R¹ and R².

The catalysts employed in step (b) may be any catalyst capable of polymerising a polyolefin having 3 or more carbon atoms, particularly propylene. Preferably the catalyst promotes the formation of a crystalline polyolefin, i.e. an isotactic or syndiotactic polyolefin, or a polyolefin comprising isotactic and/or syndiotactic blocks. Polyolefins which are not crystalline, such as atactic polyolefins are not especially preferred.

Typically, catalysts employed in step (b) may comprise a metallocene catalyst selected from any of formulae (I)-(V):

(Ind-Rₘ)₂R"MQ₂ (I)

wherein each Ind is the same or different and is an indenyl group or a tetrahydroindenyl group; each R is the same or different and is a hydrocarbyl group having from 1-20 carbon atoms; m is an integer from 0-6; R" is a structural bridge imparting stereorigidity to the catalyst; M is a metal atom from group IVB or is vanadium; and each Q is a hydrocarbon having from 1-20 carbon atoms or is a halogen;

R"(CpR¹R²)(Cp'R'ₙ)MQ₂ (IIb)

wherein Cp is a cyclopentadienyl ring; Cp' is a fluorenyl ring; R" is a structural bridge imparting stereorigidity to the catalyst; R¹ is a substituent on the cyclopentadienyl ring which is distal to the bridge, which distal substituent comprises a bulky group of the formula XR*₃ in which X is an atom from group IVA and each R* is the same or different and is chosen from a hydrogen or a hydrocarbyl group having from 1-20 carbon atoms; R² is a substituent on the cyclopentadienyl ring which is proximal to the bridge and positioned non-vicinal to the distal substituent and is of the formula YR#₃ in which Y is an atom from group IVA, and each R# is the same or different and is chosen from a hydrogen or a hydrocarbyl group having from 1-7 carbon atoms; the Cp ring may optionally comprise further substituents in addition to R¹ and R²; each R' is the same or different and is a hydrocarbyl group having from 1-20 carbon atoms, and n is an integer of from 0-8; M is a metal atom from group IVB or is vanadium; and each Q is a hydrocarbon having from 1-20 carbon atoms or is a halogen;

R"(CpRₘ)(Cp'R'ᵣ)MQ₂ (III)

wherein Cp is a substituted or unsubstituted cyclopentadienyl ring; Cp' is a substituted or unsubstituted fluorenyl ring; R" is a structural bridge imparting stereorigidity to the component; each R is the same or different and is a hydrocarbyl group having from 1-20 carbon atoms; each R' is the same or different and is a hydrocarbyl group having from 1-20 carbon atoms; m is an integer of from 0-4; r is an integer from 0-8; M is a metal atom from group IVB or is vanadium; and each Q is a hydrocarbon having from 1-20 carbon atoms or is a halogen;

R"(CpRₓ)(Cp'R'_{y})MQ₂ (IV)

wherein Cp is a substituted cyclopentadienyl ring; Cp' is a substituted or unsubstituted fluorenyl ring; R" is a structural bridge imparting stereorigidity to the component; each R is the same or different and is a hydrocarbyl group having from 1-20 carbon atoms, each R' is the same or different and is a hydrocarbyl group having from 1-20 carbon atoms, and x and y are independently an integer of from 0-4 and 0-8 respectively; M is a metal atom from group IVB or is vanadium; and each Q is a hydrocarbon having from 1-20 carbon atoms or is a halogen; wherein the CpRₓ group lacks bilateral symmetry; and wherein the Cp group is preferably substituted at the 3-position;

R"(CpR_{q})XMQ (V)

wherein Cp is a substituted cyclopentadienyl ring or a substituted or unsubstituted fluorenyl ring; R" is a structural bridge between Cp and X imparting stereorigidity to the component; each R is the same or different and is selected from a hydrocarbyl group having from 1-20 carbon atoms, a halogen, an alkoxy group, an alkoxyalkyl group, an alkylamino group or an alkylsilylo group; when Cp is a cyclopentadienyl ring; q is an integer from 0-4; and when Cp is a fluorenyl ring q is an integer from 0-8; X is a heteroatom from group VA or group VIA, substituted or unsubstituted; M is a metal atom from group IIIB, IVB, VB or VIB in any of its theoretical oxidation states; and each Q is a hydrocarbon having from 1-20 carbon atoms or is a halogen; wherein the bilateral symmetry of the CpRq group is maintained; and wherein the CpRq group is preferably symmetrically substituted.

It is particularly preferred that in step (b) catalysts having a cyclopentadienyl ligand and a fluorenyl ligand (CpFlu catalysts) are employed. This is because such catalysts have a more open structure than bisindenyl catalysts. An open structure is advantageous because there is a large angle between the cyclopentadienyl and fluorenyl groups. This allows the bulky macromers to approach the metal centre and facilitates their incorporation into the polymer backbone.

In respect of catalysts used in both step (a) and step (b), generally M may be a metal of group IVB or vanadium, preferably Ti, Zr, or Hf. Q is not especially limited and may be a halogen and/or an alkyl group, but is preferably CI.

R" is typically substituted or unsubstituted and comprises an alkylene radical having from 1-20 carbon atoms and preferably from 1-4 carbon atoms, a dialkyl germanium group, a dialkyl silicon group, a dialkyl siloxane group, an alkyl phosphine radical or an amine radical. More preferably, R" comprises an isopropylidene (Me₂C), Ph₂C, ethylenyl, Me₂S or Me₂Si group. In the case of catalysts employed in step (b), as mentioned above it is preferred that there is a large angle between the cyclopentadienyl, fluorenyl and indenyl groups, in order that the bulky macromers can approach the metal centre to be incorporated into the polymer backbone. Accordingly, in catalysts used in step (b) it is preferred that there is a single atom, such as a single carbon atom, bridging the ligands. Preferred bridging groups of this type include H₂C, Me₂C and Ph₂C.

The step of forming the macromers is not especially limited. The macromers may comprise a simple olefin monomer, in which case the step (a) preferably comprises providing the olefin monomer. Alternatively, the macromers may comprise oligomers or polymers, in which case step (a) preferably comprises polymerising the olefin monomer in the presence of a macromer-forming catalyst. In this alternative, the macromer-forming catalyst is preferably selected for promoting the formation of terminal ethylenyl groups in the macromers. Without being bound by theory, it is believed that macromers comprising a terminal unsaturated group are more readily incorporated into the polypropylene backbone in step (b), since they may take the place of a propylene monomer in the polymerisation reaction.

In one embodiment of the present method, in step (a) the macromers may be formed in the presence of ethylene to promote the formation of terminal ethylenyl groups. This may help to ensure that the concentration of terminal unsaturations in the macromers is as high as possible.

In a preferred embodiment of the method of the present invention the olefin monomer for forming the macromers is propylene. The macromers may thus comprise a propylene monomer, a propylene oligomer or a polypropylene. Alternatively the macromers may be formed from another alkene, such as ethylene, butene, pentene, or hexene. It is preferred that the olefin monomer for forming the macromers comprises a terminal unsaturated group. It is also possible that the macromers are formed from two or more co-monomers.

When the olefin monomer is propylene, the steps (a) and (b) can be carried out in a single reaction zone. This is possible, since the same monomer is employed for forming the macromers and the backbone. The macromer forming step can be carried out first under macromer-forming conditions, and then the polymerisation step can be carried out subsequently under polymerisation conditions. Alternatively, the conditions can be selected such that the macromer formation and backbone formation are carried out simultaneously.

When the monomer for forming macromers is not propylene, step (a) is carried out in a first reaction zone and step (b) is carried out in a second reaction zone. In a preferred embodiment of the present method, the first reaction zone is in series with the second reaction zone. Further reaction zones may optionally be employed if desired, for example if more than one type of macromer is to be incorporated in the backbone.

Preferably the macromers employed in the present invention comprise 2 carbon atoms or more. Typically, the macromers are long chain macromers which, when incorporated in the backbone form long chain branches. In the context of the present invention, long chain means branches comprising 100 carbon atoms or more. It is preferred that the macromers forming the branches have a molecular weight of from 2,000-50,000, more preferably from 3,000-30,000.

The level of macromer incorporation is not especially limited, provided that one or more macromers are incorporated into the polypropylene backbone. Preferably from 1-10 macromers are incorporated per 10,000 carbon atoms of the polypropylene backbone.

Polymers comprising branches of the above size and frequency have improved melt strength.

The molecular weight of the polypropylene backbone is not especially limited. Typically, the backbone has a medium molecular weight, such as of from 100,000 to 1,000,000. Preferably the molecular weight of the backbone is from 300,000 to 500,000 and most preferably is about 400,000.

The conditions under which polymerisation in step (a) or step (b) is carried out are not especially limited, provided that the formation of macromers and their incorporation in the polymer backbone is favoured. The conditions which favour the formation of branches are, for instance, conditions in which the ratio of the macromer concentration to the propylene monomer concentration is high. Typically, the polymerising step (b) is carried out as a slurry polymerisation, or as a gas phase polymerisation in which this ratio is higher than, for example, a bulk polymerisation.

In a preferred embodiment, polymerising step (b) is carried out at a temperature of 100°C or more. It is further preferred that the polymerising step (b) is carried out in the absence of hydrogen.

The catalyst system of the present invention comprises, in addition to the above catalyst component, one or more activating agents capable of activating the metallocene catalyst. Typically, the activating agent comprises an aluminium- or boron-containing activating agent.

Suitable aluminium-containing activating agents comprise an alumoxane, an alkyl aluminium compound and/or a Lewis acid.

The alumoxanes that can be used in the present invention are well known and preferably comprise oligomeric linear and/or cyclic alkyl alumoxanes represented by the formula (A): 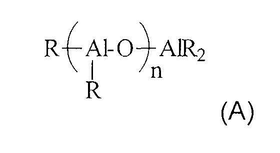 for oligomeric linear alumoxanes; and formula (B) 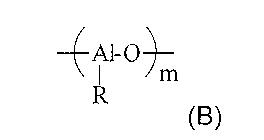 for oligomeric cyclic alumoxanes,
wherein n is 1-40, preferably 10-20; m is 3-40, preferably 3-20; and R is a C₁-C₈ alkyl group, preferably methyl. Generally, in the preparation of alumoxanes from, for example, aluminium trimethyl and water, a mixture of linear and cyclic compounds is obtained.

Suitable boron-containing activating agents may comprise a triphenylcarbenium boronate, such as tetrakis-pentafluorophenyl-borato-triphenylcarbenium as described in EP-A-0427696: 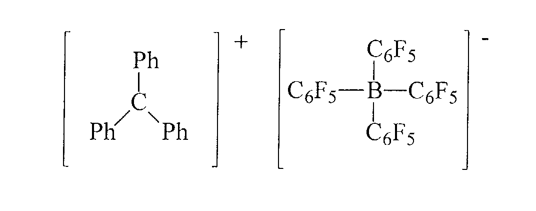 or those of the general formula below, as described in EP-A-0277004 (page 6, line 30 to page 7, line 7):

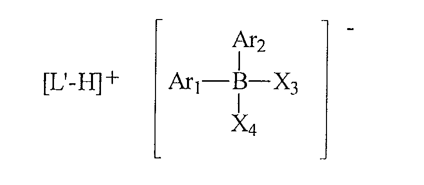

Other preferred activating agents include hydroxy isobutylaluminium and a metal aluminoxinate. These are particularly preferred when at least one Q in the general formula for metallocenes comprises an alkyl group.

The catalyst system may be employed in a solution polymerisation process, which is homogeneous, or a slurry process, which is heterogeneous. In a solution process, typical solvents include hydrocarbons having 4-7 carbon atoms such as heptane, toluene or cyclohexane. In a slurry process it is necessary to immobilise the catalyst system on an inert support, particularly a porous solid support such as talc, inorganic oxides and resinous support materials such as polyolefin. Preferably, the support material is an inorganic oxide in its finely divided form.

Suitable inorganic oxide materials which are desirably employed in accordance with this invention include group IIA, IIIA, IVA, or IVB metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalised polyolefins such as finely divided polyethylene.

Preferably, the support is a silica support having a surface area of from 200-700 m²/g and a pore volume of from 0.5-3 ml/g.

Both catalysts can be on the same or different supports.

The amount of alumoxane and metallocenes usefully employed in the preparation of the solid support catalyst can vary over a wide range. Preferably the aluminium to transition metal mole ratio is in the range between 1:1 and 100:1, preferably in the range 5:1 and 50:1.

The order of addition of the catalyst and alumoxane to the support material can vary. In accordance with a preferred embodiment of the present invention alumoxane dissolved in a suitable inert hydrocarbon solvent is added to the support material slurried in the same or other suitable hydrocarbon liquid and thereafter a the catalyst component is added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane and cyclohexane, and aromatics such as benzene, toluene, ethylbenzene and diethylbenzene.

Preferably the support material is slurried in toluene and the catalyst component and alumoxane are dissolved in toluene prior to addition to the support material.

The present invention also provides a branched polypropylene obtainable according to a method as defined above. The branched polypropylenes of the present invention are particularly useful in forming polypropylene foams, which can be used to replace polystyrene foams. The present invention therefore also provides polypropylene foams, formed from a branched polypropylene of the present invention.

The branched polypropylene of the present invention has a very high melt strength that makes it suitable for various applications such as for example thermoforming applications, extrusion blow moulding, blown films or extrusion coating.

## Claims

1. A method for the production of a polypropylene comprising branches in the polymer backbone, which method comprises:
(a) forming macromers from an olefin monomer; and
(b) polymerising propylene in the presence of the macromers and a catalyst, under polymerising conditions which favour the incorporation of the macromers into the polypropylene backbone, to form a branched polypropylene;
wherein the catalyst employed in step (a) comprises a metallocene catalyst which promotes a chain terminating β-alkyl elimination reaction to form terminal unsaturated groups in the macromers.

2. A method according to claim 1, wherein the catalyst employed in step (a) comprises a metallocene catalyst of formula (I) or formula (II):
(Ind-Rₘ)₂R"MQ₂ (I)
wherein each Ind is the same or different and is an indenyl group or a tetrahydroindenyl group; each R is the same or different and is a hydrocarbyl group having from 1-20 carbon atoms; m is an integer from 0-6; R" is a structural bridge imparting stereorigidity to the catalyst; M is a metal atom from group IVB or is vanadium; and each Q is a hydrocarbon having from 1-20 carbon atoms or is a halogen;
R"(CpRₖ)(Cp'R'ₙ)MQ₂ (II)
wherein Cp is a cyclopentadienyl ring; Cp' is a fluorenyl ring; R" is a structural bridge imparting stereorigidity to the catalyst; R is a hydrocarbyl group having from 1-20 carbon atoms; each R' is the same or different and is a hydrocarbyl group having from 1-20 carbon atoms, k is an integer of from 1-4; and n is an integer of from 0-8; M is a metal atom from group IVB or is vanadium; and each Q is a hydrocarbon having from 1-20 carbon atoms or is a halogen

3. A method according to claim 2, wherein the bisindenyl catalyst employed in step (a) comprises a symmetrical or unsymmetrical substitution pattern.

4. A method according to claim 2 or claim 3, wherein one or both indenyl groups are disubstituted.

5. A method according to any of claims 2-4, wherein one or both indenyl groups are substituted in the 2-position and/or the 3-position.

6. A method according to any of claims 2-5, wherein one or more of the substituents on the indenyl group is a bulky substituent.

7. A method according to claim 6, wherein the bulky substituent is selected from an isopropyl group, a tertiary butyl group and a trimethylsilyl (TMS) group.

8. A method according to any of claims 2-8, wherein the Cp ring on catalyst (II) is di-substituted comprising only substituents R¹ and R².

9. A method according to any preceding claim, wherein the catalyst employed in step (b) comprises a metallocene catalyst selected from any of formulae (I)-(V):
(Ind-Rₘ)₂R"MQ₂ (I)
wherein each Ind is the same or different and is an indenyl group or a tetrahydroindenyl group; each R is the same or different and is a hydrocarbyl group having from 1-20 carbon atoms; m is an integer from 0-6; R" is a structural bridge imparting stereorigidity to the catalyst; M is a metal atom from group IVB or is vanadium; and each Q is a hydrocarbon having from 1-20 carbon atoms or is a halogen;
R"(CpR¹R²)(Cp'R'ₙ)MQ₂ (IIb)
wherein Cp is a cyclopentadienyl ring; Cp' is a fluorenyl ring; R" is a structural bridge imparting stereorigidity to the catalyst; R¹ is a substituent on the cyclopentadienyl ring which is distal to the bridge, which distal substituent comprises a bulky group of the formula XR*₃ in which X is an atom from group IVA and each R* is the same or different and is chosen from a hydrogen or a hydrocarbyl group having from 1-20 carbon atoms; R² is a substituent on the cyclopentadienyl ring which is proximal to the bridge and positioned non-vicinal to the distal substituent and is of the formula YR#₃ in which Y is an atom from group IVA, and each R# is the same or different and is chosen from a hydrogen or a hydrocarbyl group having from 1-7 carbon atoms; the Cp ring may optionally comprise further substituents in addition to R¹ and R²; each R' is the same or different and is a hydrocarbyl group having from 1-20 carbon atoms, and n is an integer of from 0-8; M is a metal atom from group IVB or is vanadium; and each Q is a hydrocarbon having from 1-20 carbon atoms or is a halogen;
R"(CpRₘ)(Cp'R'ᵣ)MQ₂ (III)
wherein Cp is a substituted or unsubstituted cyclopentadienyl ring; Cp' is a substituted or unsubstituted fluorenyl ring; R" is a structural bridge imparting stereorigidity to the component; each R is the same or different and is a hydrocarbyl group having from 1-20 carbon atoms; each R' is the same or different and is a hydrocarbyl group having from 1-20 carbon atoms; m is an integer of from 0-4; r is an integer from 0-8; M is a metal atom from group IVB or is vanadium; and each Q is a hydrocarbon having from 1-20 carbon atoms or is a halogen;
R"(CpRₓ)(Cp'R'_{y})MQ₂ (IV)
wherein Cp is a substituted cyclopentadienyl ring; Cp' is a substituted or unsubstituted fluorenyl ring; R" is a structural bridge imparting stereorigidity to the component; each R is the same or different and is a hydrocarbyl group having from 1-20 carbon atoms, each R' is the same or different and is a hydrocarbyl group having from 1-20 carbon atoms, and x and y are independently an integer of from 0-4 and 0-8 respectively; M is a metal atom from group IVB or is vanadium; and each Q is a hydrocarbon having from 1-20 carbon atoms or is a halogen; wherein the CpRₓ group lacks bilateral symmetry; and wherein the Cp group is preferably substituted at the 3-position;
R"(CpR_{q})XMQ (V)
wherein Cp is a substituted cyclopentadienyl ring or a substituted or unsubstituted fluorenyl ring; R" is a structural bridge between Cp and X imparting stereorigidity to the component; each R is the same or different and is selected from a hydrocarbyl group having from 1-20 carbon atoms, a halogen, an alkoxy group, an alkoxyalkyl group, an alkylamino group or an alkylsilylo group; when Cp is a cyclopentadienyl ring; q is an integer from 0-4; and when Cp is a fluorenyl ring q is an integer from 0-8; X is a heteroatom from group VA or group VIA, substituted or unsubstituted; M is a metal atom from group IIIB, IVB, VB or VIB in any of its theoretical oxidation states; and each Q is a hydrocarbon having from 1-20 carbon atoms or is a halogen; wherein the bilateral symmetry of the CpRq group is maintained; and wherein the CpRq group is preferably symmetrically substituted.

10. A Method according to any of claims 2-9, wherein M is Ti, Zr, or Hf.

11. A method according to any of claims 2-10, wherein Q is Cl.

12. A method according to any of claims 2-11, wherein R" is substituted or unsubstituted and comprises an alkylene radical having from 1-20 carbon atoms and preferably from 1-4 carbon atoms, a dialkyl germanium group, a dialkyl silicon group, a dialkyl siloxane group, an alkyl phosphine radical or an amine radical.

13. A method according to claim 9, wherein R" is substituted or unsubstituted and comprises a single bridging atom.

14. A method according to any of claims 9-12, wherein R" comprises an isopropylidene (Me₂C), Ph₂C, ethylenyl, Me₂S or Me₂Si group.

15. A method according to claim 13, wherein R" comprises a H₂C, Me₂C, or a Ph₂C group.

16. A method according to any preceding claim, wherein in step (a) the macromers are formed in the presence of ethylene to promote the formation of terminal ethylenyl groups in the macromers.

17. A method according to any preceding claim, wherein the olefin monomer for forming the macromers comprises propylene.

18. A method according to claim 17, wherein the steps (a) and (b) are carried out in the same reaction zone and wherein the two catalysts are supported on the same support or on different supports.

19. A method according to claim 17 or claim 18, wherein the macromer forming step (a) is carried out under macromer-forming conditions and the polymerisation step (b) is carried out under polymerisation conditions.

20. A method according to any of claims 1-16, wherein the olefin monomer for forming the macromers comprises an olefin other than propylene.

21. A method according to claim 20, wherein the olefin monomer for forming the macromers comprises ethylene, butene, pentene and/or hexene.

22. A method according to claim 20 or claim 21, wherein the steps (a) and (b) are carried out in separate reaction zones.

23. A method according to any preceding claim, wherein the macromers comprise an olefin monomer, an olefin oligomer or a polyolefin.

24. A method according to claim 23, wherein step (a) is carried out in a first reaction zone and step (b) is carried out in a second reaction zone in series with the first reaction zone.

25. A method according to any preceding claim, wherein step (b) is carried out as a slurry polymerisation, or as a gas phase polymerisation.

26. A method according to any preceding claim, wherein step (b) is carried out at a temperature of 100°C or more.

27. A method according to any preceding claim, wherein step (b) is carried out in the absence of hydrogen.

28. A branched polypropylene obtainable according to a method as defined in any preceding claim.

29. A branched polypropylene according to claim 28, which comprises a branched isotactic polypropylene.

30. A polypropylene foam, prepared from a branched polypropylene as defined in claim 26 or claim 27.

31. A blown film prepared from a branched polypropylene as defined in claim 26 or claim 27.
